(19) Europäisches Patentamt
European Patent Office
Office européen des brevets

(11) **EP 3 412 492 A1**

(12) **EUROPEAN PATENT APPLICATION**
published in accordance with Art. 153(4) EPC

(43) Date of publication:
**12.12.2018 Bulletin 2018/50**

(51) Int Cl.:
*B60L 11/18* (2006.01)          *B60M 7/00* (2006.01)
*H02J 7/00* (2006.01)          *H02J 50/90* (2016.01)

(21) Application number: **16889434.3**

(22) Date of filing: **19.12.2016**

(86) International application number:
**PCT/JP2016/087830**

(87) International publication number:
**WO 2017/134951 (10.08.2017 Gazette 2017/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.02.2016 JP 2016021137**

(71) Applicants:
• **Kabushiki Kaisha Toshiba
Minato-ku
Tokyo 105-8001 (JP)**

• **Toshiba Infrastructure Systems &
Solutions Corporation
Kawasaki-shi, Kanagawa 212-8585 (JP)**

(72) Inventors:
• **TAKEHARA, Jun
Tokyo 105-8001 (JP)**
• **MIYOSHI, Fumiyasu
Tokyo 105-8001 (JP)**
• **NAKATANI, Hiroshi
Tokyo 105-8001 (JP)**
• **TAKANAKA, Tooru
Tokyo 105-8001 (JP)**

(74) Representative: **AWA Sweden AB
Östra Storgatan 7
553 21 Jönköping (SE)**

(54) **CHARGING DEVICE AND POSITIONAL DEVIATION DETECTION METHOD**

(57) A charging device according to one embodiment includes a charging unit, a measuring unit, and a detecting unit. The charging unit charges a power storage functional unit included in a vehicle stopping in a rectangular predefined area. The measuring unit is capable of measuring a vertical distance to a point in a first plane that is provided in a first position serving as a roof or a bottom of the vehicle, and that has a gradient of a first angle with respect to a horizontal plane toward an orthogonal direction orthogonal to a traveling direction of the vehicle. The detecting unit detects an angle of inclination of the vehicle with respect to a longitudinal direction based on a first difference, a distance, and the first angle, the first difference being a difference between a first vertical distance to a first point in the first plane and a second vertical distance to a second point in the first plane having a position in the traveling direction different from that of the first point, the distance being a distance between the first point and the second point.

FIG.1

**Description**

FIELD

Embodiments of the present invention relates to a charging device and a positional deviation detection method.

BACKGROUND

For reduction of global warming and provision for depletion of oil resources, electric vehicles (EVs) driven by electrical energy have been introduced. The electric vehicles are also being introduced into public transportation. In each of the electric vehicles, a power storage functional unit, such as a battery, mounted on the electric vehicle needs to be charged with the electrical energy. An electric vehicle bus (EV bus) as an example of the electric vehicle can be efficiently operated by charging the power storage functional unit while passengers are getting on and off at a bus stop.

CITATION LIST

Patent Literature

   Patent Literature 1: Japanese Patent Application Laid-open No. 2011-16514
   Patent Literature 2: Japanese Patent Application Laid-open No. 2005-289580

SUMMARY OF THE INVENTION

Problem to be Solved by the Invention

A request is being made to enable automatic charging without manual operations for charging the power storage functional unit of the electric vehicle from a charger installed on the ground. For example, in the case where the charger is installed at the bus stop and the power storage functional unit is charged while the passengers are getting on and off the EV bus at the bus stop, the charging is desirably performed automatically, saving effort associated with the charging, because the driver of the EV bus has operations, for example, to check safety and collect fees from the passengers. However, to automate the charging of the power storage functional unit of the electric vehicle, the electric vehicle needs to be accurately stopped in a predefined area where the charging can be made by the charger.

Means for Solving Problem

A charging device according to one embodiment includes a charging unit, a measuring unit, and a detecting unit. The charging unit charges a power storage functional unit included in a vehicle stopping in a rectangular predefined area. The measuring unit is capable of measuring a vertical distance to a point in a first plane that is provided in a first position serving as a roof or a bottom of the vehicle, and that has a gradient of a first angle with respect to a horizontal plane toward an orthogonal direction orthogonal to a traveling direction of the vehicle. The detecting unit detects an angle of inclination of the vehicle with respect to a longitudinal direction based on a first difference, a distance, and the first angle, the first difference being a difference between a first vertical distance to a first point in the first plane and a second vertical distance to a second point in the first plane having a position in the traveling direction different from that of the first point, the distance being a distance between the first point and the second point.

BRIEF DESCRIPTION OF DRAWINGS

   FIG. 1 is a diagram illustrating an exemplary configuration of a charging system according to a first embodiment of the present invention.
   FIG. 2 is an exemplary overhead view of a charging area in the charging system according to the first embodiment, as viewed from above.
   FIG. 3A is a diagram for explaining an example of an EV bus charged in the charging system according to the first embodiment.
   FIG. 3B is another diagram for explaining the example of the EV bus charged in the charging system according to the first embodiment.

FIG. 3C is still another diagram for explaining the example of the EV bus charged in the charging system according to the first embodiment.

FIG. 3D is still another diagram for explaining the example of the EV bus charged in the charging system according to the first embodiment.

FIG. 3E is a diagram for explaining still another example of the EV bus charged in the charging system according to the first embodiment.

FIG. 4 is a diagram illustrating an example of a first reflecting plane provided on a roof of the EV bus charged in the charging system according to the first embodiment.

FIG. 5A is a diagram for explaining an example of detection processing of a positional deviation of the EV bus in the charging system according to the first embodiment.

FIG. 5B is another diagram for explaining the example of the detection processing of the positional deviation of the EV bus in the charging system according to the first embodiment.

FIG. 5C is still another diagram for explaining the example of the detection processing of the positional deviation of the EV bus in the charging system according to the first embodiment.

FIG. 6A is a diagram for explaining another example of the detection processing of the positional deviation of the EV bus in the charging system according to the first embodiment.

FIG. 6B is another diagram for explaining the other example of the detection processing of the positional deviation of the EV bus in the charging system according to the first embodiment.

FIG. 6C is still another diagram for explaining the other example of the detection processing of the positional deviation of the EV bus in the charging system according to the first embodiment.

FIG. 7A is an exemplary diagram of a relation between points in the first reflecting plane to which vertical distances are measured in the charging system according to the first embodiment, as viewed from above the charging area.

FIG. 7B is another exemplary diagram of the relation between the points in the first reflecting plane to which the vertical distances are measured in the charging system according to the first embodiment, as viewed from above the charging area.

FIG. 8 is an exemplary diagram of the relation between the points in the first reflecting plane to which the vertical distances are measured in the charging system according to the first embodiment, as viewed from an exit side of the charging area.

FIG. 9 is a diagram illustrating an exemplary configuration of a charging system according to a second embodiment of the present invention.

FIG. 10 is a diagram illustrating an exemplary configuration of a charging system according to a third embodiment of the present invention.

FIG. 11 is a diagram illustrating an example of reflecting planes provided on the roof of the EV bus charged in a charging system according to a fourth embodiment of the present invention.

FIG. 12 is a diagram illustrating an example of reflecting planes provided on the roof of the EV bus charged in a charging system according to a fifth embodiment of the present invention.

FIG. 13 is a diagram illustrating an example of reflecting planes provided on the roof of the EV bus charged in a charging system according to a seventh embodiment of the present invention.

FIG. 14 is a diagram for explaining an example of a detection flow of the positional deviation of the EV bus in the charging system according to the seventh embodiment.

FIG. 15 is a diagram for explaining an example of reflecting planes provided on the roof of the charging area in a charging system according to an eighth embodiment of the present invention.

FIG. 16 is a diagram for explaining an example of a detection flow of the positional deviation of the EV bus in the charging system according to the eighth embodiment.

FIG. 17 is a diagram illustrating an example of positional deviation information displayed on a display unit in charging systems according to the first to ninth embodiments.

FIG. 18 is a diagram illustrating an exemplary charging method of the EV bus in the charging systems according to the first to ninth embodiments.

DETAILED DESCRIPTION

The following describes, using the accompanying drawings, charging systems to which a charging device and a positional deviation detection method according to embodiments of the present invention are applied.

First Embodiment

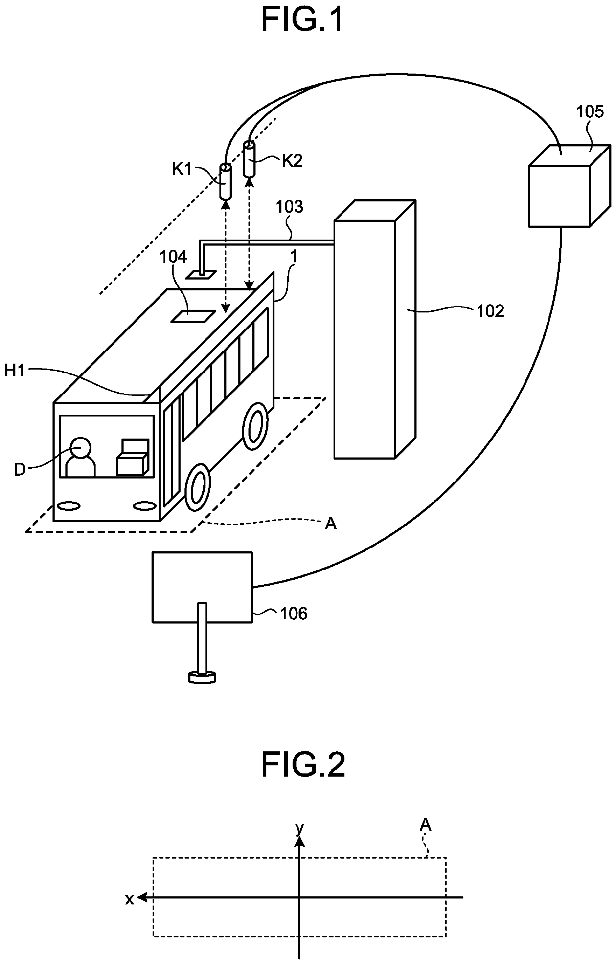

FIG. 1 is a diagram illustrating an exemplary configuration of a charging system according to a first embodiment of the present invention. As illustrated in FIG. 1, the charging system according to the present embodiment includes a charging unit 102, a power feeding unit 103, a first distance measuring instrument K1, a second distance measuring instrument K2, a positional deviation detecting unit 105, and a display unit 106. The charging unit 102 charges a power storage functional unit, such as a battery, provided in an electric vehicle (EV) bus 1 (an example of a vehicle) stopping in a charging area A. In the present embodiment, the charging unit 102 charges the power storage functional unit by feeding power to the power storage functional unit of the EV bus 1 through the power feeding unit 103 provided so as to be movable to near a power receiving unit 104 provided on a roof of the EV bus 1.

The charging area A is a rectangular predefined area. In the present embodiment, the charging area A is a rectangular area having a longitudinal direction in a direction from an entrance of the charging area A toward an exit of the charging area A. Specifically, the length in the longitudinal direction of the charging area A is equal to a vehicle length of the EV bus 1 (such as 10 m) or a length obtained by adding a predetermined allowable deviation to the vehicle length of the EV bus 1. The length in a lateral direction of the charging area A is equal to a vehicle width of the EV bus 1 (such as 2 m) or a length obtained by adding the predetermined allowable deviation to the vehicle width of the EV bus 1. The predetermined allowable deviation refers to a positional deviation allowable for the EV bus 1 in the charging area A when the power storage functional unit of the EV bus 1 stopping in the charging area A is charged.

The first and second distance measuring instruments K1 and K2 are examples of measuring units that are provided facing a first reflecting plane H1 (an example of a first plane) provided on the roof (an example of a first position) of the EV bus 1, and that can measure vertical distances to points in the first reflecting plane H1. The first distance measuring instrument K1 (an example of a first measuring unit) can measure the vertical distance to a point in the first reflecting plane H1. The second distance measuring instrument K2 (an example of a second measuring unit) is provided closer than the first distance measuring instrument K1 to an entrance side of the charging area A, and can measure the vertical distance to another point in the first reflecting plane H1. In the present embodiment, the first and second distance measuring instruments K1 and K2 are provided above the first reflecting plane H1 by a structure such as a supporting pole (not illustrated), and are provided so as to be capable of measuring the vertical distances to the points on a line in the first reflecting plane H1 parallel to the longitudinal direction of the charging area A. In the present embodiment, each of the first and second distance measuring instruments K1 and K2 is, for example, a laser distance meter, and can measure the distance to an object, such as the first reflecting plane H1, at a level of accuracy of 1.0 mm or smaller.

The positional deviation detecting unit 105 (an example of a detecting unit) detects the positional deviation of the EV bus 1 with respect to the charging area A (in the present embodiment, an inclination of the EV bus 1 with respect to the longitudinal direction of the charging area A) based on, for example, the vertical distances measured by the first and second distance measuring instruments K1 and K2. In the present embodiment, when the power storage functional unit of the EV bus 1 stopping in the charging area A is charged, the positional deviation detecting unit 105 stores therein the positional deviation of the EV bus 1 allowable in the charging area A (hereinafter, called an allowable positional deviation), such as the inclination of the EV bus 1 allowable with respect to the longitudinal direction of the charging area A. The positional deviation detecting unit 105 displays positional deviation information on the detected positional deviation of the EV bus 1 on the display unit 106. In the present embodiment, the display unit 106 is provided in a position in front of the EV bus 1 stopping in the charging area A and visible by a driver D of the EV bus 1, and can display various types of information, such as the positional deviation information. In the following description, the EV bus 1 will be described as precisely docked in the charging area A when the positional deviation detected by the positional deviation detecting unit 105 is equal to or smaller than the allowable positional deviation.

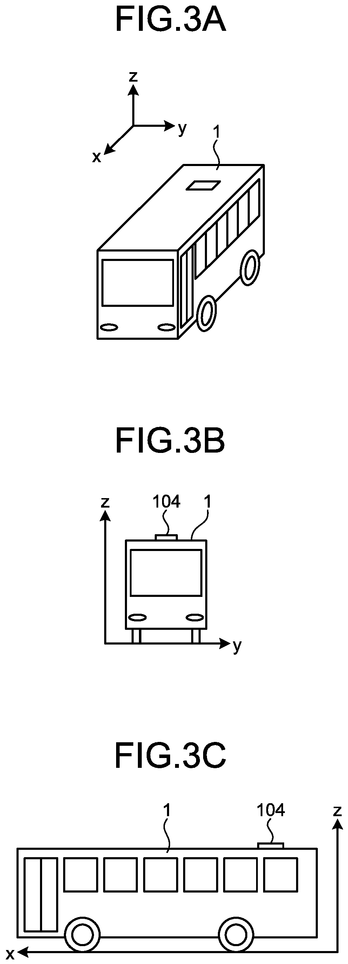

The following describes, using FIGS. 2 and 3A to 3E, the EV bus 1 charged in the charging system according to the present embodiment. FIG. 2 is an exemplary overhead view of the charging area in the charging system according to the first embodiment, as viewed from above. FIGS. 3A to 3E are diagrams for explaining examples of the EV bus charged in the charging system according to the first embodiment.

As illustrated in FIG. 2, in the charging system according to the present embodiment, the longitudinal direction of the charging area A is referred to as an x-axis direction, and the lateral direction of the charging area A is referred to as a y-axis direction. As illustrated in FIG. 3A, the vertical direction of the charging area A is referred to as a z-axis direction.

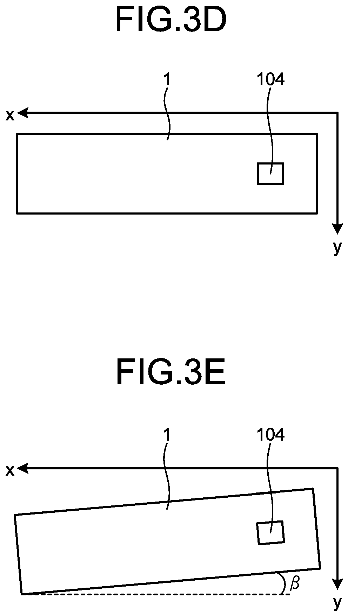

FIG. 3B is a diagram of the EV bus 1 stopping in the charging area A, as viewed from an exit side of the charging area A. FIG. 3C is a diagram of the EV bus 1 stopping in the charging area A, as viewed from a lateral side. FIG. 3D is a diagram of the EV bus 1 stopping in the charging area A, as viewed from above. FIG. 3E is a diagram of the EV bus 1 stopping at an angle with respect to the longitudinal direction of the charging area A, as viewed from above. When the EV bus 1 has stopped in the charging area A as illustrated in FIG. 3E, the positional deviation detecting unit 105 detects an angle β (hereinafter, called an inclination angle) at which the EV bus 1 is inclined with respect to the longitudinal direction of the charging area A.

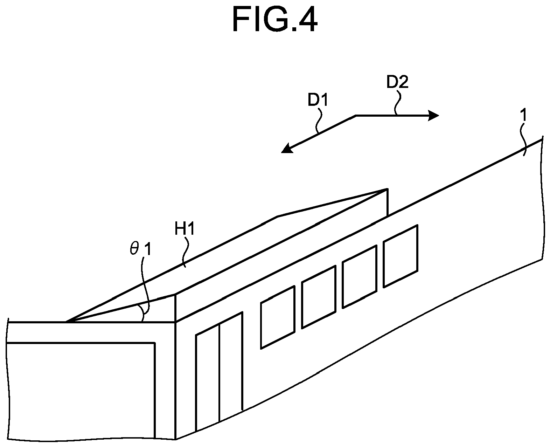

The following describes, using FIG. 4, an example of the first reflecting plane H1 provided on the roof of the EV bus 1 charged in the charging system according to the present embodiment. FIG. 4 is a diagram illustrating the example of the first reflecting plane provided on the roof of the EV bus charged in the charging system according to the first embodiment.

As illustrated in FIG. 4, the first reflecting plane H1 is a plane having a gradient of a first angle $\theta 1$ with respect to a horizontal plane in an orthogonal direction D2 orthogonal to a traveling direction D1 of the EV bus 1. In the present embodiment, a non-specular reflective member, such as a member of a diffusively reflective material, is preferably used as the first reflecting plane H1. In the present embodiment, the first reflecting plane H1 has a height difference of several centimeters to several tens of centimeters with respect to the roof of the EV bus 1. In the present embodiment, the first reflecting plane H1 is preferably a plane having an inclination gradually increasing in height with respect to the horizontal plane from inside toward outside the roof of the EV bus 1. This configuration can prevent light emitted from, for example, the first and second distance measuring instruments K1 and K2 toward the first reflecting plane H1 from being reflected outward of the EV bus 1. Therefore, the light reflected by the first reflecting plane H1 can be prevented from entering eyes of passengers of the EV bus 1.

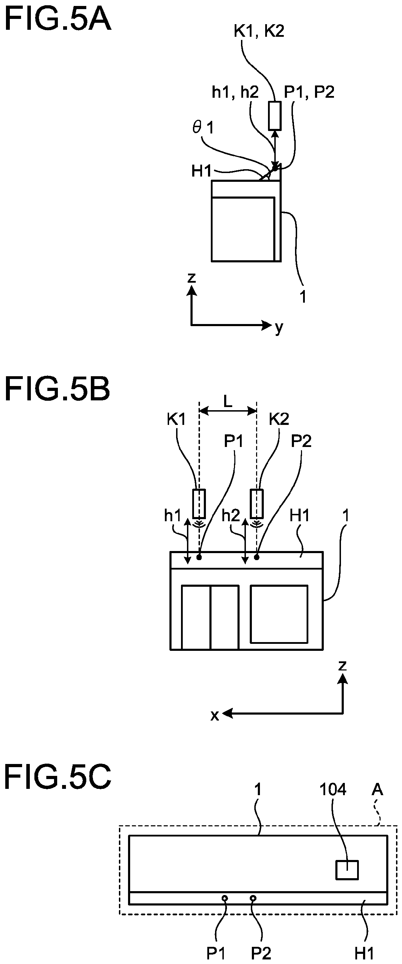

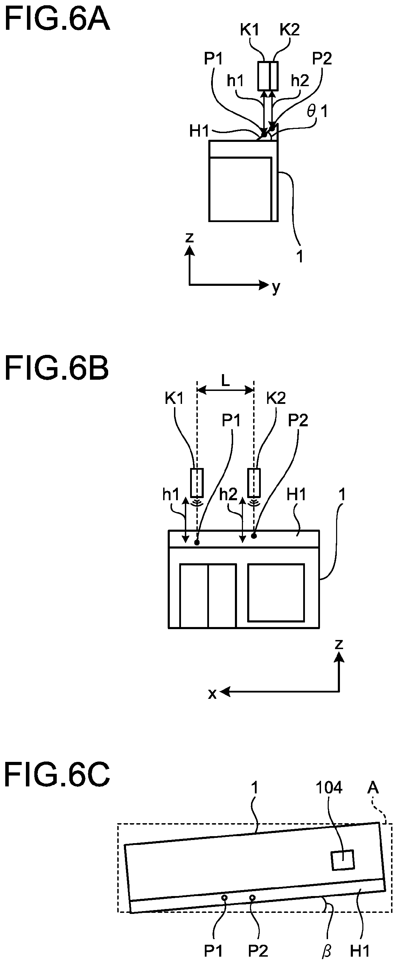

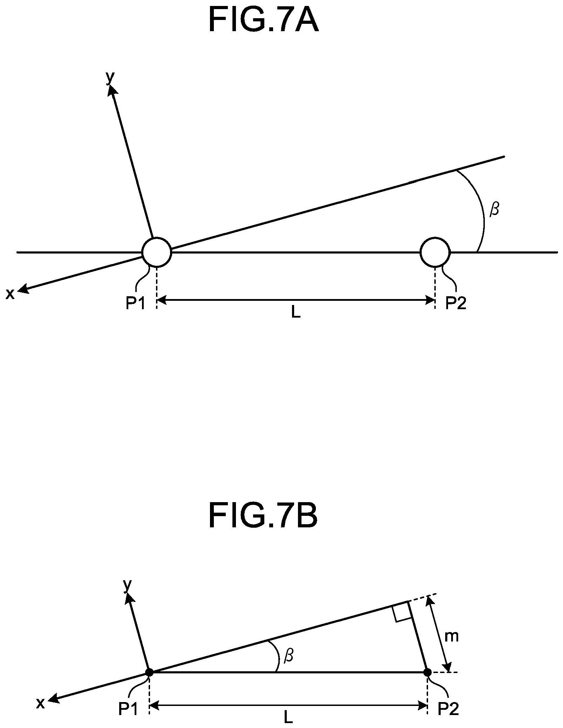

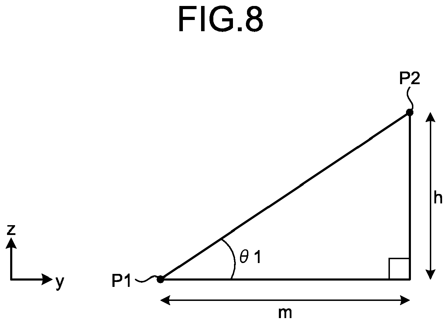

The following describes, using FIGS. 5A to 5C, 6A to 6C, 7A and 7B, and 8, detection processing of the positional deviation performed by the positional deviation detecting unit 105 of the charging system according to the present embodiment. FIGS. 5A to 5C and 6A to 6C are diagrams for explaining examples of the detection processing of the positional deviation of the EV bus in the charging system according to the first embodiment. FIGS. 7A and 7B are exemplary diagrams of a relation between points in the first reflecting plane to which the vertical distances are measured in the charging system according to the first embodiment, as viewed from above the charging area. FIG. 8 is an exemplary diagram of the relation between the points in the first reflecting plane to which the vertical distances are measured in the charging system according to the first embodiment, as viewed from the exit side of the charging area.

FIGS. 5A and 6A are diagrams of the EV bus 1, as viewed from the exit side of the charging area A. FIGS. 5B and 6B are side views of the EV bus 1. FIGS. 5C and 6C are diagrams of the EV bus 1, as viewed from above the charging area A. As illustrated in FIGS. 5A to 5C and 6A to 6C, the first and second distance measuring instruments K1 and K2 measure the vertical distances to respective points P1 and P2 (examples of a first point and a second point) in the first reflecting plane H1 that are located in positions different from each other in the traveling direction D1 of the EV bus 1. In the present embodiment, the first and second distance measuring instruments K1 and K2 measure distances to points in the first reflecting plane H1 that are located on a line parallel to the longitudinal direction of the charging area A. Therefore, as illustrated in FIGS. 5A, 5B, and 5C, when the EV bus 1 has been precisely docked without being inclined with respect to the longitudinal direction of the charging area A, a vertical distance h1 to the point P1 in the first reflecting plane H1 measured by the first distance measuring instrument K1 is equal to a vertical distance h2 to the point P2 in the first reflecting plane H1 measured by the second distance measuring instrument K2.

In contrast, as illustrated in FIGS. 6A and 6B, when the EV bus 1 has stopped while being inclined at the inclination angle $\beta$ with respect to the longitudinal direction of the charging area A, the point P1 and the point P2 in the first reflecting plane H1 are at different heights from the roof of the EV bus 1. Therefore, as illustrated in FIGS. 6A, 6B, and 6C, when the EV bus 1 has stopped at an angle with respect to the longitudinal direction of the charging area A, the vertical distance h1 to the point P1 measured by the first distance measuring instrument K1 differs from the vertical distance h2 to the point P2 measured by the second distance measuring instrument K2.

Accordingly, the positional deviation detecting unit 105 detects the inclination angle $\beta$ of the EV bus 1 with respect to the longitudinal direction of the charging area A based on the difference (an example of a first difference) between the vertical distance h1 (an example of a first vertical distance) to the point P1 (the example of the first point) measured by the first distance measuring instrument K1 and the vertical distance h2 (an example of a second vertical distance) to the point P2 (the example of the second point) measured by the second distance measuring instrument K2, a distance L between the point P1 and the point P2, and the first angle $\theta 1$. Since the distance L between the point P1 and the point P2 and the first angle $\theta 1$ are preset values, the inclination angle $\beta$ of the EV bus 1 can be detected using trigonometric functions if the difference between the vertical distance h1 and the vertical distance h2 can be obtained.

Specifically, when detecting the inclination angle $\beta$ of the EV bus 1, the positional deviation detecting unit 105 acquires the distance L between the point P1 and the point P2 (in the present embodiment, the distance between the first distance measuring instrument K1 and the second distance measuring instrument K2), as illustrated in FIG. 7A. A straight line connecting the point P1 to the point P2 intersects the longitudinal direction of the charging area A (x-axis) at the inclination angle $\beta$ of the EV bus 1. Consequently, as illustrated in FIG. 7B, an orthogonal line m drawn from the point P2 to the longitudinal direction of the charging area A (x-axis) is represented by Expression (1) below.

$$\mathrm{m} = \mathrm{L} \times \sin \beta \qquad\qquad\qquad (1)$$

When the EV bus 1 has stopped at an angle with respect to the longitudinal direction of the charging area A, the vertical distance h1 to the point P1 measured by the first distance measuring instrument K1 and the vertical distance h2 to the point P2 measured by the second distance measuring instrument K2 have a difference h therebetween, as illustrated in FIG. 8. The difference h is represented by Expression (2) below.

$$h = L \times \sin \beta \times \tan \theta1 \tag{2}$$

According to Expression (2) above, the inclination angle β can be obtained by Expression (3) below.

$$\beta = \sin^{-1} (h/L \times \tan \theta1) \tag{3}$$

In the present embodiment, the positional deviation detecting unit 105 determines whether the detected inclination angle β is larger than a predetermined angle included in the allowable positional deviation. The predetermined angle is an upper limit angle of the inclination angle β at which the charging unit 102 can charge the power storage functional unit of the EV bus 1. If the detected inclination angle β exceeds the predetermined angle, the positional deviation detecting unit 105 detects the positional deviation of the EV bus 1 with respect to the charging area A. The positional deviation detecting unit 105 displays the positional deviation information (such as the direction of movement of the EV bus 1 for correcting the inclination thereof with respect to the longitudinal direction of the charging area A and the detected inclination angle β) on the display unit 106. This display allows the driver D of the EV bus 1 to correct the inclination angle β of the EV bus 1 with respect to the charging area A. If, instead, the detected inclination angle β is equal to or smaller than the predetermined angle, the positional deviation detecting unit 105 does not detect the positional deviation of the EV bus 1 with respect to the charging area A, and displays information indicating that the EV bus 1 has been precisely docked in the charging area A as the positional deviation information on the display unit 106.

In this manner, since the charging system according to the first embodiment can accurately detect the inclination angle β of the EV bus 1 with respect to the charging area A, the driver D of the EV bus 1 can more accurately stop the EV bus 1 with respect to the charging area A.

In the present embodiment, the vertical distances to the respective two points in the first reflecting plane H1 are measured using the two distance measuring instruments of the first and second distance measuring instruments K1 and K2 as the examples of the measuring units. However, the vertical distances to the respective two points in the first reflecting plane H1 may be measured using one distance measuring instrument as an example of a measuring unit. In this case, in the process in which the EV bus 1 moves in the charging area A, the one distance measuring instrument measures the vertical distances to the respective two points in the first reflecting plane H1 that are located in positions different from each other in the traveling direction D1 of the EV bus 1.

When the first reflecting plane H1 is provided on the roof of the EV bus 1, the first reflecting plane H1 is preferably provided so as to cover various devices, such as an outdoor unit of an air conditioner and a device for charging, provided on the roof of the EV bus 1. This configuration can prevent the various devices provided on the roof of the EV bus 1 from coming into contact with, for example, a roadside tree.

Second Embodiment

A second embodiment of the present invention is an example in which the first reflecting plane is provided at the bottom of the EV bus. In the following description, the same configurations as those of the first embodiment will not be described.

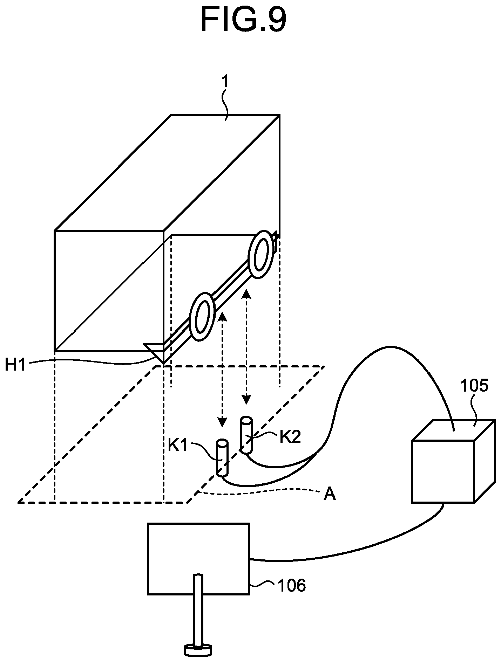

FIG. 9 is a diagram illustrating an exemplary configuration of a charging system according to the second embodiment. As illustrated in FIG. 9, in the present embodiment, the first reflecting plane H1 is provided at the bottom (an example of the first position) of the EV bus 1. Hence, the first and second distance measuring instruments K1 and K2 are provided facing the bottom of the EV bus 1 so as to be capable of measuring the vertical distances to points in the first reflecting plane H1 that are located in positions different from each other in the traveling direction D1 of the EV bus 1. In the present embodiment, the first and second distance measuring instruments K1 and K2 are embedded in a road surface of the charging area A, and can measure the vertical distances to the points on a line in the first reflecting plane H1 parallel to the longitudinal direction of the charging area A. In the same manner as in the first embodiment, the positional deviation detecting unit 105 uses, for example, the vertical distances measured by the first and second distance measuring instruments K1 and K2 to detect the inclination angle β of the EV bus 1.

In this manner, also in the case where the first reflecting plane H1 is provided at the bottom of the EV bus 1, with the charging system according to the second embodiment, the same operational effect as that of the first embodiment can be obtained.

Third Embodiment

A third embodiment of the present invention is an example in which the first reflecting plane is provided above the EV bus stopping in the charging area. In the following description, the same configurations as those of the first embodiment will not be described.

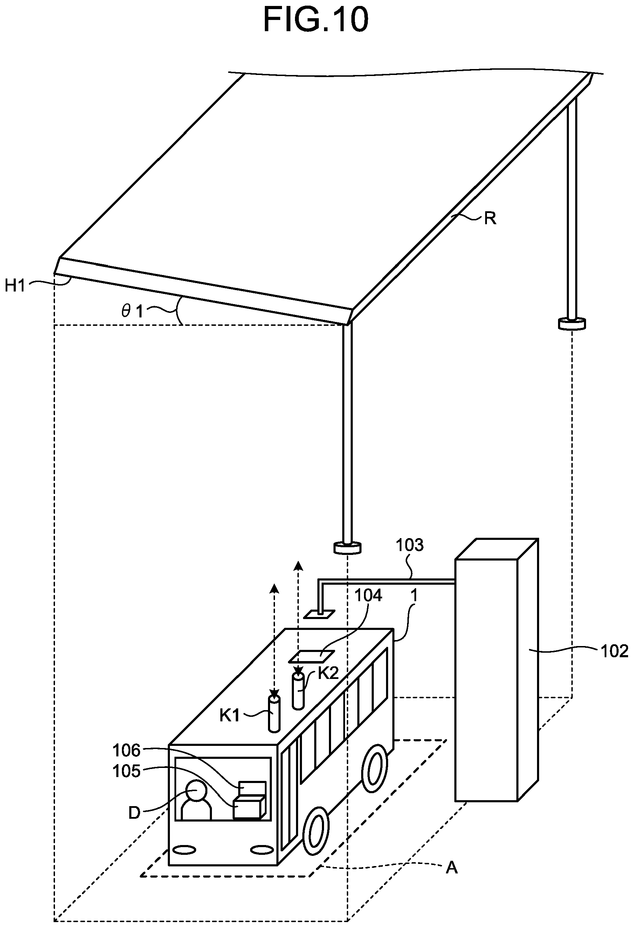

FIG. 10 is a diagram illustrating an exemplary configuration of a charging system according to the third embodiment. As illustrated in FIG. 10, in the charging system according to the present embodiment, the first reflecting plane H1 is provided on a roof R covering at least the charging area A. Hence, the first and second distance measuring instruments K1 and K2 are provided on the roof of the EV bus 1 so as to be capable of measuring the vertical distances to points in the first reflecting plane H1 that are located in positions different from each other with respect to the longitudinal direction of the charging area A. In the present embodiment, the second distance measuring instrument K2 is provided on an aft side of the EV bus 1 relative to the first distance measuring instrument. In the present embodiment, the first and second distance measuring instruments K1 and K2 are provided on a line parallel to the traveling direction of the EV bus 1.

In the present embodiment, the positional deviation detecting unit 105 is provided in the EV bus 1. In the same manner as in the first embodiment, the positional deviation detecting unit 105 uses, for example, the vertical distances measured by the first and second distance measuring instruments K1 and K2 to detect the inclination angle $\beta$ of the EV bus 1. The positional deviation detecting unit 105 determines whether the detected inclination angle $\beta$ is larger than the predetermined angle. If the detected inclination angle $\beta$ exceeds the predetermined angle, the positional deviation detecting unit 105 displays, for example, the direction of movement of the EV bus 1 for correcting the inclination angle $\beta$ and the detected inclination angle $\beta$ as the positional deviation information on the display unit 106. If, instead, the detected inclination angle $\beta$ is equal to or smaller than the predetermined angle, the positional deviation detecting unit 105 displays the information indicating that the EV bus 1 has been precisely docked in the charging area A as the positional deviation information on the display unit 106.

In this manner, also in the case where the first reflecting plane H1 is provided above the EV bus 1 stopping in the charging area A, with the charging system according to the third embodiment, the same operational effect as that of the first embodiment can be obtained. Since the first reflecting plane H1 can be used also as a roof for rain protection at a bus stop provided with the charging area A, an increase in cost due to the provision of the first reflecting plane H1 can be restrained, and the first reflecting plane H1 can be provided causing no sense of discomfort about the surrounding landscape.

Fourth Embodiment

A fourth embodiment of the present invention is an example in which vertical distances are measured to points in a second reflecting plane on the roof or the bottom of the EV bus that is provided on a fore side in the traveling direction of the EV bus than the first reflecting plane and that has no gradient, and a positional deviation of the EV bus in the lateral direction of the charging area A is detected using differences between vertical distances to points in the first reflecting plane and vertical distances to points in the second reflecting plane. In the following description, the same portions as those of the first embodiment will not be described.

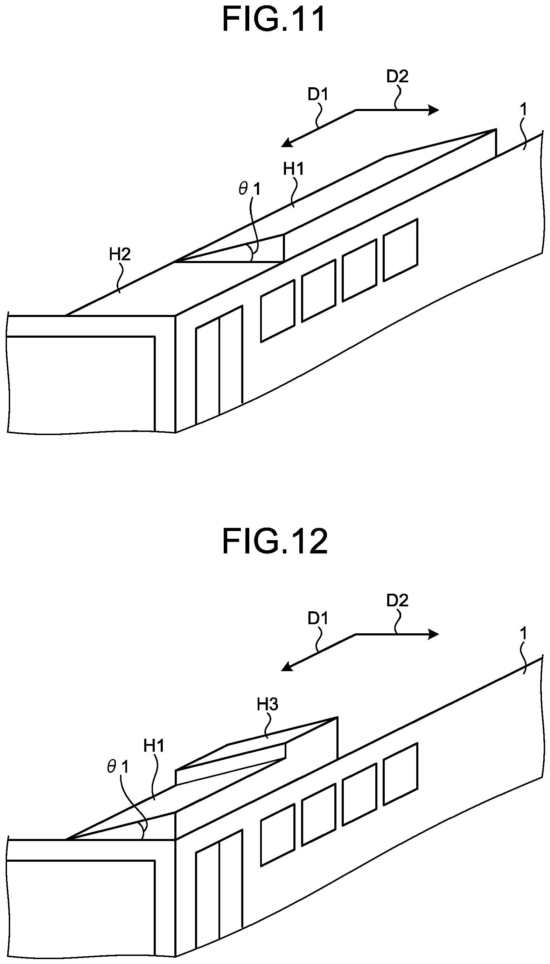

FIG. 11 is a diagram illustrating an example of the reflecting planes provided on the roof of the EV bus charged in a charging system according to the fourth embodiment. As illustrated in FIG. 11, in the present embodiment, the EV bus 1 includes, on the roof of the EV bus 1, a second reflecting plane H2 that is provided on the fore side in the traveling direction D1 relative to the first reflecting plane H1 and that has no gradient. A non-specular reflective member, such as a member of a diffusively reflective material, is preferably used as the second reflecting plane H2.

In the present embodiment, when the EV bus 1 has advanced into the charging area A, the first and second distance measuring instruments K1 and K2 first measure the vertical distances to the second reflecting plane H2. The positional deviation detecting unit 105 stores therein the vertical distance to the second reflecting plane H2 measured by the first distance measuring instrument K1 as a reference distance $h_{ref1}$. The positional deviation detecting unit 105 stores therein the vertical distance to the second reflecting plane H2 measured by the second distance measuring instrument K2 as a reference distance $h_{ref2}$. Since the second reflecting plane H2 has no gradient (in other words, since the second reflecting plane H2 is horizontal), the reference distance $h_{ref1}$ is equal to the reference distance $h_{ref2}$.

Subsequently, when the EV bus 1 has further advanced into the charging area A and the second distance measuring instrument K2 is located over the first reflecting plane H1, the first distance measuring instrument K1 measures the vertical distance h1 to a point in the second reflecting plane H2, and the second distance measuring instrument K2 measures the vertical distance h2 to a point in the first reflecting plane H1. As a result, the vertical distance h2 measured by the second distance measuring instrument K2 is smaller than the vertical distance h1 measured by the first distance measuring instrument K1. Thereafter, when the EV bus 1 has further advanced into the charging area A and the first and second distance measuring instruments K1 and K2 are located over the first reflecting plane H1, the first and second distance measuring instruments K1 and K2 together measure the vertical distances h1 and h2 to points in the first reflecting plane H1.

When the vertical distance h1 measured by the first distance measuring instrument K1 has decreased to be smaller than the reference distance $_{ref1}$, or when the vertical distance h2 measured by the second distance measuring instrument K2 has decreased to be smaller than the reference distance $_{ref2}$, the positional deviation detecting unit 105 obtains at least either one of a difference h1y between the vertical distance h1 and the reference distance $_{ref1}$ and a difference h2y between the vertical distance h2 and the reference distance $_{ref2}$. In other words, the positional deviation detecting unit 105 obtains the difference h1y between the reference distance $h_{ref1}$ and the vertical distance h1 to a point in the first reflecting plane H1 having the same position in the orthogonal direction D2 as the position in the second reflecting plane H2 where the reference distance $h_{ref1}$ has been measured. Otherwise, the positional deviation detecting unit 105 obtains the difference h2y between the reference distance $_{ref2}$ and the vertical distance h2 to a point in the first reflecting plane H1 having the same position in the orthogonal direction D2 as the position in the second reflecting plane H2 where the reference distance $h_{ref2}$ has been measured.

Subsequently, the positional deviation detecting unit 105 calculates a positional deviation $\Delta y1$ (hereinafter, called a right-left deviation) of the EV bus 1 with respect to the lateral direction of the charging area A based on the difference h1y, a value hp of the difference h1y (hereinafter, called a reference value) in the case where the EV bus 1 has stopped in the charging area A (in the case where the EV bus 1 has been precisely docked in the charging area A), and the first angle $\theta1$. Specifically, the positional deviation detecting unit 105 obtains the right-left deviation $\Delta y1$ using Expression (4) below.

$$\Delta y1 = (hp - h1y)/\tan \theta1 \qquad (4)$$

The positional deviation detecting unit 105 calculates a right-left deviation $\Delta y2$ of the EV bus 1 with respect to the lateral direction of the charging area A based on the difference h2y, the reference value hp, and the first angle $\theta1$. Specifically, the positional deviation detecting unit 105 obtains the right-left deviation $\Delta y2$ using Expression (5) below.

$$\Delta y2 = (hp - h2y)/\tan \theta1 \qquad (5)$$

If at least either one of the detected right-left deviations $\Delta y1$ and $\Delta y2$ is larger than a predetermined amount of deviation included in the allowable positional deviation, the positional deviation detecting unit 105 displays the direction of movement of the EV bus 1 for correcting the right-left deviations $\Delta y1$ and $\Delta y2$ and the detected right-left deviations $\Delta y1$ and $\Delta y2$ as the positional deviation information on the display unit 106. If, instead, both of the detected right-left deviations $\Delta y1$ and $\Delta y2$ are equal to or smaller than the predetermined amount of deviation, the positional deviation detecting unit 105 displays the information indicating that the EV bus 1 has been precisely docked in the charging area A as the positional deviation information on the display unit 106.

In this manner, since the charging system according to the fourth embodiment can accurately detect the right-left deviations $\Delta y1$ and $\Delta y2$ of the EV bus 1 with respect to the charging area A, the driver D of the EV bus 1 can more accurately stop the EV bus 1 with respect to the charging area A.

Fifth Embodiment

A fifth embodiment of the present invention is an example in which vertical distances are measured to points in a third reflecting plane on the roof or the bottom of the EV bus that is provided on an aft side in the traveling direction of the EV bus relative to the first reflecting plane and that is parallel to the first reflecting plane, and a determination is made as to whether the EV bus has the positional deviation with respect to the longitudinal direction of the charging area, using differences between vertical distances to points in the first reflecting plane and vertical distances to points in the third reflecting plane. In the following description, the same configurations as those of the first embodiment will not be described.

FIG. 12 is a diagram illustrating an example of the reflecting planes provided on the roof of the EV bus charged in a charging system according to the fifth embodiment. As illustrated in FIG. 12, in the present embodiment, the EV bus 1 includes, on the roof of the EV bus 1, a third reflecting plane H3 (an example of a third plane) that is provided on the aft side in the traveling direction D1 relative to the first reflecting plane H1 and that is parallel to the first reflecting plane H1. The difference of the third reflecting plane H3 relative to the first reflecting plane H1 (an example of a third difference) in the vertical direction from the roof of the EV bus 1 is larger than an upper limit hq (hereinafter, called a difference upper limit) of the difference between the vertical distances (an example of the first difference) to the two points in the first reflecting plane H1 that is caused by the inclination angle $\beta$ of the EV bus 1. In the present embodiment, the difference upper limit hq is a value allowing for an error in the difference between the vertical distances to the two points in the first reflecting plane H1. A non-specular reflective member, such as a member of a diffusively reflective material, is preferably used as the third reflecting plane H3. In the present embodiment, the first and second distance measuring instruments K1 and K2 are provided in positions where vertical distances to points in the third reflecting plane H3 can be measured when the EV bus 1 has been precisely docked in the charging area A.

In the present embodiment, when the EV bus 1 has advanced into the charging area A, the vertical distance measured by the second distance measuring instrument K2 first changes to the vertical distance to a point in the first reflecting plane H1. The positional deviation detecting unit 105 stores therein the vertical distance measured by the second distance measuring instrument K2 as a reference vertical distance. Thereafter, the positional deviation detecting unit 105 waits until the EV bus 1 further advances into the charging area A to change the vertical distance measured by the second distance measuring instrument K2. If the difference upper limit hq is reached by the difference between the reference vertical distance and the vertical distance measured by the second distance measuring instrument K2 after the reference vertical distance has been measured, the positional deviation detecting unit 105 determines that the positional deviation of the EV bus 1 with respect to the longitudinal direction of the charging area A has been eliminated.

Otherwise, the positional deviation detecting unit 105 stores therein the vertical distance to a point in the first reflecting plane H1 measured by the first distance measuring instrument K1 as the reference vertical distance. Thereafter, the positional deviation detecting unit 105 waits until the EV bus 1 further advances into the charging area A to change the vertical distance measured by the first distance measuring instrument K1. The positional deviation detecting unit 105 may determine that the positional deviation of the EV bus 1 with respect to the longitudinal direction of the charging area A has been eliminated if the difference upper limit hq is reached by the difference between the reference vertical distance and the vertical distance measured by the first distance measuring instrument K1 after the reference vertical distance has been measured.

If the positional deviation detecting unit 105 determines that the positional deviation of the EV bus 1 with respect to the longitudinal direction of the charging area A has been eliminated, the positional deviation detecting unit 105 displays the information indicating that the EV bus has been precisely docked in the charging area A as the positional deviation information on the display unit 106.

In this manner, since the charging system according to the fifth embodiment can accurately determine that the positional deviation of the EV bus 1 with respect to the longitudinal direction of the charging area A has been eliminated, the driver D of the EV bus 1 can more accurately stop the EV bus 1 with respect to the charging area A.

Sixth Embodiment

A sixth embodiment of the present invention is an example in which the position of the EV bus with respect to the longitudinal direction of the charging area is determined to have come close to a position where the charging unit can charge the EV bus in the charging area if the difference upper limit is reached by the difference between the reference vertical distance measured by the second distance measuring instrument and the vertical distance measured by the second distance measuring instrument after the reference vertical distance has been measured. In the following description, the same configurations as those of the fifth embodiment will not be described.

In the present embodiment, when the EV bus 1 has advanced into the charging area A, the vertical distance measured by the second distance measuring instrument K2 first changes to the vertical distance to a point in the first reflecting plane H1. The positional deviation detecting unit 105 stores therein the vertical distance measured by the second distance measuring instrument K2 as the reference vertical distance. Thereafter, when the EV bus 1 has further advanced into the charging area A, the positional deviation detecting unit 105 detects that the vertical distance measured by the first distance measuring instrument K1 changes to the vertical distance to a point in the first reflecting plane H1. The positional deviation detecting unit 105 stores therein the vertical distance measured by the first distance measuring instrument K1 as the reference vertical distance.

The positional deviation detecting unit 105 waits until the EV bus 1 further advances into the charging area A to change the vertical distance measured by the second distance measuring instrument K2. If the difference upper limit hq is reached by the difference between the reference vertical distance measured by the second distance measuring instrument K2 and the vertical distance measured by the second distance measuring instrument K2 after the reference vertical distance has been measured, the positional deviation detecting unit 105 detects that the difference between the position of the EV bus 1 with respect to the longitudinal direction of the charging area A and the position (hereinafter, called a precise docking position) where the charging unit 102 can perform the charging in the charging area A is equal to or smaller than a predetermined threshold. At that time, the positional deviation detecting unit 105 displays information indicating that the position of the EV bus 1 with respect to the longitudinal direction of the charging area A has come close to the precise docking position as the positional deviation information on the display unit 106.

The positional deviation detecting unit 105 waits until the EV bus 1 further advances into the charging area A to change the vertical distance measured by the first distance measuring instrument K1. If the difference upper limit hq is reached by the difference between the reference vertical distance measured by the first distance measuring instrument K1 and the vertical distance measured by the first distance measuring instrument K1 after the reference vertical distance has been measured, the positional deviation detecting unit 105 determines that the positional deviation of the EV bus 1 with respect to the longitudinal direction of the charging area A has been eliminated.

In this manner, since a charging system according to the sixth embodiment can accurately determine that the positional deviation of the EV bus 1 with respect to the longitudinal direction of the charging area A has decreased and that the positional deviation has been eliminated, the driver D of the EV bus 1 can more accurately stop the EV bus 1 with respect to the charging area A.

Seventh Embodiment

A seventh embodiment of the present invention is an example in which the second distance measuring instrument can measure the vertical distance to a point in a fourth reflecting plane on the roof or the bottom of the EV bus that is provided on an aft side in the traveling direction of the EV bus relative to the third reflecting plane and that is parallel to the first reflecting plane, and the positional deviation of the EV bus with respect to the longitudinal direction of the charging area A is detected if the difference upper limit is reached by the difference between the vertical distance measured by the first distance measuring instrument and the vertical distance measured by the second distance measuring instrument and then the vertical distance measured by the second distance measuring instrument changes before the charging unit 102 performs the charging. In the following description, the same configurations as those of the sixth embodiment will not be described.

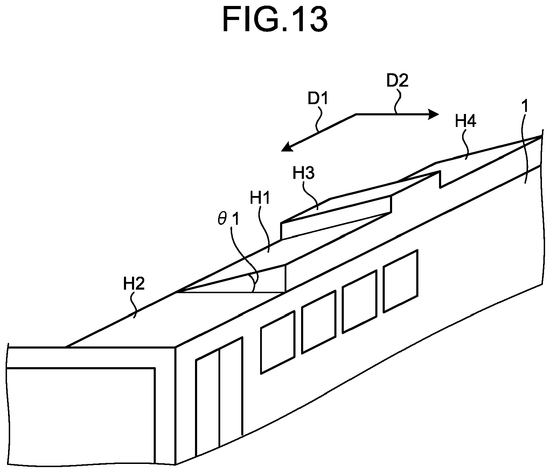

FIG. 13 is a diagram illustrating an example of the reflecting planes provided on the roof of the EV bus charged in a charging system according to the seventh embodiment. As illustrated in FIG. 13, in the present embodiment, the EV bus 1 includes, on the roof of the EV bus 1, a fourth reflecting plane H4 (an example of a fourth plane) that is provided on an aft side in the traveling direction D1 than the third reflecting plane H3 and that is parallel to the first reflecting plane H1. The position of the fourth reflecting plane H4 in the vertical direction from the roof of the EV bus 1 differs from that of at least the third reflecting plane H3. In the present embodiment, the position of the fourth reflecting plane H4 in the vertical direction from the roof of the EV bus 1 differs from those of all of the first reflecting plane H1, the second reflecting plane H2, and the third reflecting plane H3. A non-specular reflective member, such as a member of a diffusively reflective material, is preferably used as the fourth reflecting plane H4.

In the present embodiment, if the positional deviation of the EV bus 1 with respect to the longitudinal direction of the charging area A is determined to have been eliminated and then the vertical distance measured by the second distance measuring instrument K2 changes before the charging unit 102 charges the power storage functional unit of the EV bus 1, the positional deviation detecting unit 105 detects that the position of the EV bus 1 with respect to the longitudinal direction of the charging area A has passed through the precise docking position. In this manner, an overrun of the EV bus 1 with respect to the charging area A can be detected. At that time, the positional deviation detecting unit 105 displays information indicating that the position of the EV bus 1 has overrun the charging area A on the display unit 106.

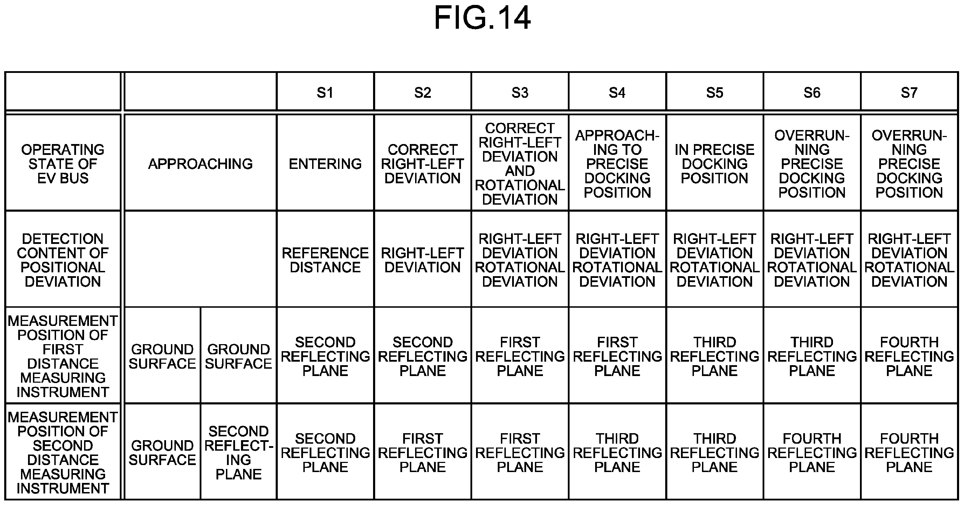

The following describes, using FIGS. 13 and 14, a detection flow of the positional deviation of the EV bus 1 in the charging system according to the present embodiment. FIG. 14 is a diagram for explaining an example of the detection flow of the positional deviation of the EV bus in the charging system according to the seventh embodiment. In the present embodiment, as illustrated in FIG. 13, the EV bus 1 includes, on the roof of the EV bus 1, the second reflecting plane H2, the first reflecting plane H1, the third reflecting plane H3, and the fourth reflecting plane H4, in this order from the front side in the traveling direction D1.

As illustrated in FIG. 14, the first and second distance measuring instruments K1 and K2 measure vertical distances to the ground surface until the EV bus 1 comes close to the charging area A. After the EV bus 1 passes through the entrance of the charging area A, the second distance measuring instrument K2 measures the vertical distance to a point in the second reflecting plane H2 provided on the roof of the EV bus 1. When the EV bus 1 has further advanced into the charging area A, the first and second distance measuring instruments K1 and K2 together measure vertical distances to points in the second reflecting plane H2. The positional deviation detecting unit 105 stores therein the vertical distance to the second reflecting plane H2 measured by the first distance measuring instrument K1 (reference distance $H_{ref1}$) and the vertical distance to the second reflecting plane H2 measured by the second distance measuring instrument K2 (reference distance $H_{ref2}$) (Step S1).

Subsequently, when the EV bus 1 has further advanced into the charging area A and the second distance measuring instrument K2 is located over the first reflecting plane H1, the positional deviation detecting unit 105 obtains the difference h2y between the vertical distance h2 measured by the second distance measuring instrument K2 and the reference distance $_{ref2}$. The positional deviation detecting unit 105 detects the deviation (right-left deviation) of the EV bus 1 with respect to the lateral direction of the charging area A based on the difference h2y, the reference value hp, and the first angle $\theta 1$ (Step S2). The positional deviation detecting unit 105 displays the positional deviation information indicating the detected right-left deviation on the display unit 106. This display allows the driver D of the EV bus 1 to check the positional deviation information displayed on the display unit 106 and correct the right-left deviation of the EV bus 1.

Subsequently, when the EV bus 1 has further advanced into the charging area A and the first and second distance measuring instruments K1 and K2 are located over the first reflecting plane H1, the positional deviation detecting unit 105 detects the inclination angle β (rotational deviation) of the EV bus 1 with respect to the longitudinal direction of the charging area A based on the difference between the vertical distance h1 to the point P1 in the first reflecting plane H1 measured by the first distance measuring instrument K1 and the vertical distance h2 to the point P2 in the first reflecting plane H1 measured by the second distance measuring instrument K2, the distance L between the point P1 and the point P2, and the first angle θ1 (Step S3). At that time, the positional deviation detecting unit 105 obtains the difference h1y between the vertical distance h1 measured by the first distance measuring instrument K1 and the reference distance $_{ref1}$. The positional deviation detecting unit 105 may detect the deviation (right-left deviation) of the EV bus 1 with respect to the lateral direction of the charging area A based on the difference h1y, the reference value hp, and the first angle θ1 (Step S3). The positional deviation detecting unit 105 displays the positional deviation information indicating the rotational deviation and the right-left deviation thus detected on the display unit 106. This display allows the driver D of the EV bus 1 to check the information displayed on the display unit 106 and correct the rotational deviation and the right-left deviation of the EV bus 1.

When the EV bus 1 has further advanced into the charging area A and the second distance measuring instrument K2 is located over the third reflecting plane H3 to change the vertical distance measured by the second distance measuring instrument K2, the positional deviation detecting unit 105 determines whether the difference upper limit hq is reached by the difference between the vertical distance (reference vertical distance) to the point in the first reflecting plane H1 measured by the second distance measuring instrument K2 and the vertical distance measured by the second distance measuring instrument K2 after the reference vertical distance has been measured. If the difference upper limit hq is reached by the difference between the reference vertical distance measured by the second distance measuring instrument K2 and the vertical distance (vertical distance to the point in the third reflecting plane H3) measured by the second distance measuring instrument K2 after the reference vertical distance has been measured, the positional deviation detecting unit 105 determines that the position of the EV bus 1 with respect to the longitudinal direction (front-rear direction) of the charging area A has come close to the precise docking position (Step S4). The positional deviation detecting unit 105 displays the positional deviation information indicating that the position of the EV bus 1 with respect to the longitudinal direction (front-rear direction) of the charging area A has come close to the precise docking position and indicating the rotational deviation and the right-left deviation detected at Step S3, on the display unit 106. This display allows the driver D of the EV bus 1 to check that the positional deviation of the EV bus 1 with respect to the longitudinal direction of the charging area A has decreased to a small value.

When the EV bus 1 has further advanced into the charging area A and the first and second distance measuring instruments K1 and K2 are located over the third reflecting plane H3, the positional deviation detecting unit 105 determines whether the difference upper limit hq is reached by the difference between the vertical distance (reference vertical distance) to the point in the first reflecting plane H1 measured by the first distance measuring instrument K1 and the vertical distance measured by the first distance measuring instrument K1 after the reference vertical distance has been measured. If the difference upper limit hq is reached by the difference between the reference vertical distance measured by the first distance measuring instrument K1 and the vertical distance (vertical distance to the point in the third reflecting plane H3) measured by the first distance measuring instrument K1 after the reference vertical distance has been measured, the positional deviation detecting unit 105 determines that the positional deviation of the EV bus 1 with respect to the longitudinal direction of the charging area A has been eliminated (in other words, the EV bus 1 has been precisely docked with respect to the front-rear direction of the charging area A) (Step S5). The positional deviation detecting unit 105 displays the positional deviation information indicating that the EV bus 1 has been precisely docked with respect to the longitudinal direction of the charging area A and indicating the rotational deviation and the right-left deviation detected at Step S3, on the display unit 106. This display allows the driver D of the EV bus 1 to check that the EV bus 1 has been precisely docked with respect to the front-rear direction of the charging area A.

Thereafter, if, before the charging unit 102 performs the charging, the driver D of the EV bus 1 moves the EV bus 1 in the longitudinal direction of the charging area A by mistake and the second distance measuring instrument K2 is located over the fourth reflecting plane H4 to change the vertical distance measured by the second distance measuring instrument K2, the positional deviation detecting unit 105 detects the positional deviation of the EV bus 1 with respect to the longitudinal direction (front-rear direction) of the charging area A (in other words, that the EV bus 1 is no longer precisely docked with respect to the front-rear direction of the charging area A) (Step S6). The positional deviation detecting unit 105 displays the positional deviation information indicating that the EV bus 1 is no longer precisely docked with respect to the front-rear direction of the charging area A and indicating the rotational deviation and the right-left deviation detected at Step S3, on the display unit 106. This display allows the driver D of the EV bus 1 to check that the position of the EV bus 1 has started to deviate with respect to the front-rear direction of the charging area A.

Otherwise, the positional deviation detecting unit 105 may detect the positional deviation of the EV bus 1 with respect to the longitudinal direction (front-rear direction) of the charging area A (in other words, that the EV bus 1 has overrun the position where the charging can be performed, with respect to the front-rear direction of the charging area A) if the driver D of the EV bus 1 moves the EV bus 1 and the first distance measuring instrument K1 is located over the fourth reflecting plane H4 to change the vertical distance measured by the first distance measuring instrument K1 (Step S7). The positional deviation detecting unit 105 displays the positional deviation information indicating that the EV bus 1 has overrun the position where the charging can be performed, with respect to the front-rear direction of the charging area A, and indicating the rotational deviation and the right-left deviation detected at Step S3, on the display unit 106. This display allows the driver D of the EV bus 1 to check that the EV bus 1 has overrun the position where the charging can be performed, with respect to the front-rear direction of the charging area A.

In this manner, since the charging system according to the seventh embodiment can accurately detect the overrun of the EV bus 1 in the longitudinal direction of the charging area A, the driver D of the EV bus 1 can more accurately stop the EV bus 1 with respect to the charging area A.

Eighth Embodiment

An eighth embodiment of the present invention is an example in which the first reflecting plane, the second reflecting plane, the third reflecting plane, and the fourth reflecting plane are provided above the EV bus stopping in the charging area. In the following description, the same configurations as those of the seventh embodiment will not be described.

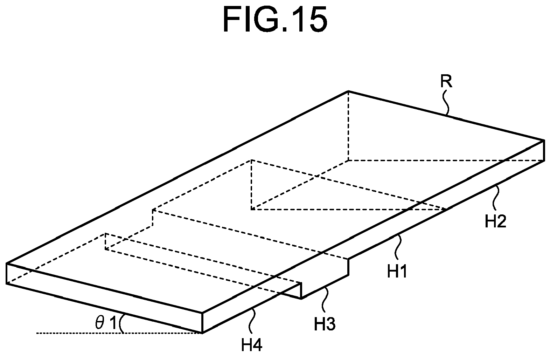

FIG. 15 is a diagram for explaining an example of the reflecting planes provided on the roof of the charging area in a charging system according to the eighth embodiment. As illustrated in FIG. 15, in the present embodiment, the roof R covering the charging area A includes the second reflecting plane H2, the first reflecting plane H1, the third reflecting plane H3, and the fourth reflecting plane H4, in this order from the entrance side for the EV bus 1 into the charging area A, along the longitudinal direction of the charging area A. In the present embodiment, in the same manner as in the third embodiment, the roof of the EV bus 1 is provided with the first and second distance measuring instruments K1 and K2.

In the same manner as in the seventh embodiment, the positional deviation detecting unit 105 uses the vertical distances to the points in the respective reflecting planes measured by the first and second distance measuring instruments K1 and K2 to detect the deviation of the EV bus 1 with respect to the lateral direction of the charging area A, the inclination of the EV bus 1 with respect to the longitudinal direction of the charging area A, the positional deviation of the EV bus 1 with respect to the longitudinal direction of the charging area A, and the overrun of the EV bus 1 with respect to the longitudinal direction of the charging area A.

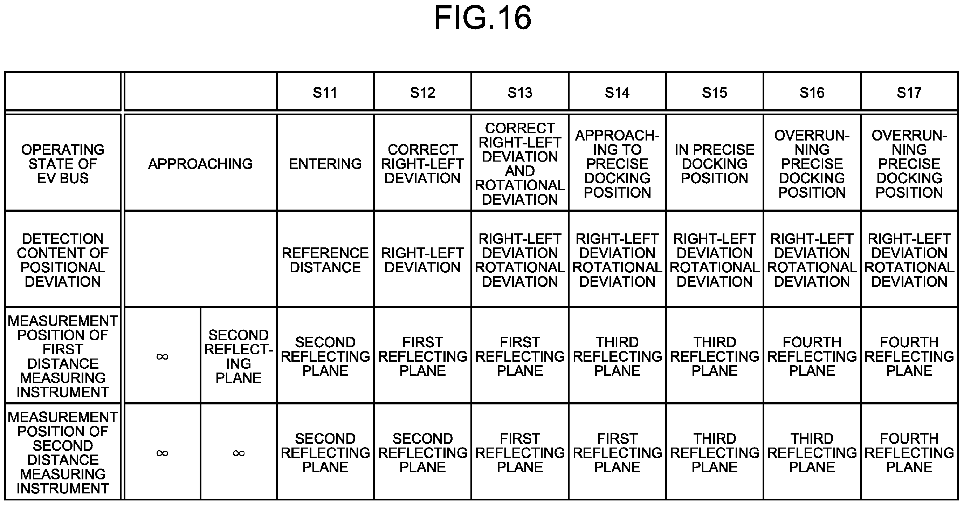

The following describes, using FIG. 16, a detection flow of the positional deviation of the EV bus 1 in the charging system according to the present embodiment.

FIG. 16 is a diagram for explaining an example of the detection flow of the positional deviation of the EV bus in the charging system according to the eighth embodiment.

As illustrated in FIG. 16, during a period until the EV bus 1 comes close to the charging area A, the vertical distances measured by the first and second distance measuring instruments K1 and K2 provided on the roof of the EV bus 1 are infinite. After the EV bus 1 passes through the entrance of the charging area A, the first distance measuring instrument K1 measures the vertical distance to a point in the second reflecting plane H2 provided on the roof of the EV bus 1. When the EV bus 1 has further advanced into the charging area A, the first and second distance measuring instruments K1 and K2 together measure vertical distances to points in the second reflecting plane H2. The positional deviation detecting unit 105 stores therein the vertical distance to the second reflecting plane H2 measured by the first distance measuring instrument K1 (reference distance $H_{ref1}$) and the vertical distance to the second reflecting plane H2 measured by the second distance measuring instrument K2 (reference distance $H_{ref2}$) (Step S11).

Subsequently, when the EV bus 1 has further advanced into the charging area A and the first distance measuring instrument K1 is located under the first reflecting plane H1, the positional deviation detecting unit 105 obtains the difference h1y between the vertical distance h1 measured by the first distance measuring instrument K1 and the reference distance $_{ref1}$. The positional deviation detecting unit 105 detects the deviation (right-left deviation) of the EV bus 1 with respect to the lateral direction of the charging area A based on the difference h1y, the reference value hp, and the first angle θ1 (Step S12). The positional deviation detecting unit 105 displays the positional deviation information indicating the detected right-left deviation on the display unit 106. This display allows the driver D of the EV bus 1 to check the positional deviation information displayed on the display unit 106 and correct the right-left deviation of the EV bus 1.

Subsequently, when the EV bus 1 has further advanced into the charging area A and the second distance measuring instrument K2 is located under the first reflecting plane H1, the positional deviation detecting unit 105 detects the inclination angle β (rotational deviation) of the EV bus 1 with respect to the longitudinal direction of the charging area A based on the difference between the vertical distance h1 to the point P1 in the first reflecting plane H1 measured by the first distance measuring instrument K1 and the vertical distance h2 to the point P2 in the first reflecting plane H1 measured by the second distance measuring instrument K2, the distance L between the point P1 and the point P2, and the first angle θ1 (Step S13). At that time, the positional deviation detecting unit 105 obtains the difference h2y between the vertical distance h2 measured by the second distance measuring instrument K2 and the reference distance $_{ref2}$. The positional deviation detecting unit 105 may detect the deviation (right-left deviation) of the EV bus 1 with respect to the lateral direction of the charging area A based on the difference h2y, the reference value hp, and the first angle θ1 (Step S13). The positional deviation detecting unit 105 displays the positional deviation information indicating the rotational deviation and the right-left deviation thus detected on the display unit 106. This display allows the driver D of the EV bus 1 to check the positional deviation information displayed on the display unit 106 and correct the rotational deviation and the right-left deviation of the EV bus 1.

When the EV bus 1 has further advanced into the charging area A and the first distance measuring instrument K1 is located under the third reflecting plane H3 to change the vertical distance measured by the first distance measuring instrument K1, the positional deviation detecting unit 105 determines whether the difference upper limit hq is reached by the difference between the vertical distance (reference vertical distance) to the point in the first reflecting plane H1 measured by the first distance measuring instrument K1 and the vertical distance measured by the first distance measuring instrument K1 after the reference vertical distance has been measured. If the difference upper limit hq is reached by the difference between the reference vertical distance measured by the first distance measuring instrument K1 and the vertical distance (vertical distance to the point in the third reflecting plane H3) measured by the first distance measuring instrument K1 after the reference vertical distance has been measured, the positional deviation detecting unit 105 determines that the position of the EV bus 1 with respect to the longitudinal direction (front-rear direction) of the charging area A has come close to the precise docking position (Step S14). The positional deviation detecting unit 105 displays the positional deviation information indicating that the position of the EV bus 1 with respect to the longitudinal direction (front-rear direction) of the charging area A has come close to the precise docking position and indicating the rotational deviation and the right-left deviation detected at Step S13, on the display unit 106. This display allows the driver D of the EV bus 1 to check that the positional deviation of the EV bus 1 with respect to the front-rear direction of the charging area A has decreased to a small value.

When the EV bus 1 has further advanced into the charging area A and the second distance measuring instrument K2 is located under the third reflecting plane H3, the positional deviation detecting unit 105 determines whether the difference upper limit hq is reached by the difference between the vertical distance (reference vertical distance) to the point in the first reflecting plane H1 measured by the second distance measuring instrument K2 and the vertical distance measured by the second distance measuring instrument K2 after the reference vertical distance has been measured. If the difference upper limit hq is reached by the difference between the reference vertical distance measured by the second distance measuring instrument K2 and the vertical distance (vertical distance to the point in the third reflecting plane H3) measured by the second distance measuring instrument K2 after the reference vertical distance has been measured, the positional deviation detecting unit 105 determines that the positional deviation of the EV bus 1 with respect to the longitudinal direction (front-rear direction) of the charging area A has been eliminated (in other words, the EV bus 1 has been precisely docked with respect to the front-rear direction of the charging area A) (Step S15). The positional deviation detecting unit 105 displays the positional deviation information indicating that the EV bus 1 has been precisely docked with respect to the longitudinal direction of the charging area A and indicating the rotational deviation and the right-left deviation detected at Step S13, on the display unit 106. This display allows the driver D of the EV bus 1 to check that the EV bus 1 has been precisely docked with respect to the front-rear direction of the charging area A.

Thereafter, if, before the charging unit 102 performs the charging, the driver D of the EV bus 1 moves the EV bus 1 in the longitudinal direction of the charging area A by mistake and the first distance measuring instrument K1 is located under the fourth reflecting plane H4 to change the vertical distance measured by the first distance measuring instrument K1, the positional deviation detecting unit 105 detects the positional deviation of the EV bus 1 with respect to the longitudinal direction (front-rear direction) of the charging area A (in other words, that the EV bus 1 is no longer precisely docked with respect to the front-rear direction of the charging area A) (Step S16). The positional deviation detecting unit 105 displays the positional deviation information indicating that the EV bus 1 is no longer precisely docked with respect to the front-rear direction of the charging area A and indicating the rotational deviation and the right-left deviation detected at Step S13, on the display unit 106. This display allows the driver D of the EV bus 1 to check that the position of the EV bus 1 has started to deviate with respect to the front-rear direction of the charging area A.

If the driver D of the EV bus 1 further moves the EV bus 1 and the second distance measuring instrument K2 is located under the fourth reflecting plane H4 to change the vertical distance measured by the second distance measuring instrument K2, the positional deviation detecting unit 105 detects the positional deviation of the EV bus 1 with respect to the longitudinal direction (front-rear direction) of the charging area A (in other words, that the EV bus 1 has overrun the position where the charging can be performed, with respect to the front-rear direction of the charging area A) (Step S17). The positional deviation detecting unit 105 displays the positional deviation information indicating that the EV bus 1 has overrun the position where the charging can be performed, with respect to the front-rear direction of the charging area A, and indicating the rotational deviation and the right-left deviation detected at Step S13, on the display unit 106. This display allows the driver D of the EV bus 1 to check that the EV bus 1 has overrun the position where the charging can be performed, with respect to the front-rear direction of the charging area A.

In this manner, also in the case where the first reflecting plane H1, the second reflecting plane H2, the third reflecting plane H3, and the fourth reflecting plane H4 are provided above the roof of the EV bus 1, with the charging system according to the eighth embodiment, the same operational effect as that of the above-described embodiments can be obtained.

Ninth Embodiment

A ninth embodiment of the present invention is an example in which a fifth reflecting plane is provided above the EV bus stopping in the charging area, so as to be closer to the exit side of the charging area than the fourth reflecting plane along the longitudinal direction of the charging area. In the following description, the same portions as those of the eighth embodiment will not be described.

In the present embodiment, the roof R covering the charging area A includes a fifth reflecting plane H5 closer to the exit side of the charging area A than the fourth reflecting plane H4 along the longitudinal direction of the charging area A. In the same manner as the second reflecting plane H2, the fifth reflecting plane H5 is a reflecting plane that has no gradient with respect to the horizontal plane. A non-specular reflective member, such as a member of a diffusively reflective material, is preferably used as the fifth reflecting plane H5. Thus, the reflecting planes provided on the roof R covering the charging area A have a symmetrical configuration in the longitudinal direction of the charging area A.

Consequently, if the EV bus 1 has overrun the charging area A and advances reversely again into the charging area A from the exit side of the charging area A, and also, if the EV bus 1 advances, by mistake, into the charging area A from the exit side thereof, the positional deviation detecting unit 105 can detect the positional deviation of the EV bus 1 with respect to the charging area A, in the same manner as in the detection flow of the positional deviation of the EV bus 1 illustrated in FIG. 16.

In the present embodiment, the roof R covering the charging area A is provided with the reflecting planes, in the order of the second reflecting plane H2, the first reflecting plane H1, the third reflecting plane H3, the fourth reflecting plane H4, and the fifth reflecting plane H5 along the longitudinal direction of the charging area A. However, the present invention is not limited to this example. The roof or the bottom of the EV bus 1 may be provided with the reflecting planes, in the order of the second reflecting plane H2, the first reflecting plane H1, the third reflecting plane H3, the fourth reflecting plane H4, and the fifth reflecting plane H5 from the front side of the EV bus 1 along the traveling direction D1 of the EV bus 1.

In this manner, a charging system according to the ninth embodiment can detect the positional deviation of the EV bus 1 with respect to the charging area A in either of the case where the EV bus 1 has overrun the charging area A and advances again into the charging area A from the exit side of the charging area A, and the case where the EV bus 1 advances forward into the charging area A from the entrance side or the exit side thereof.

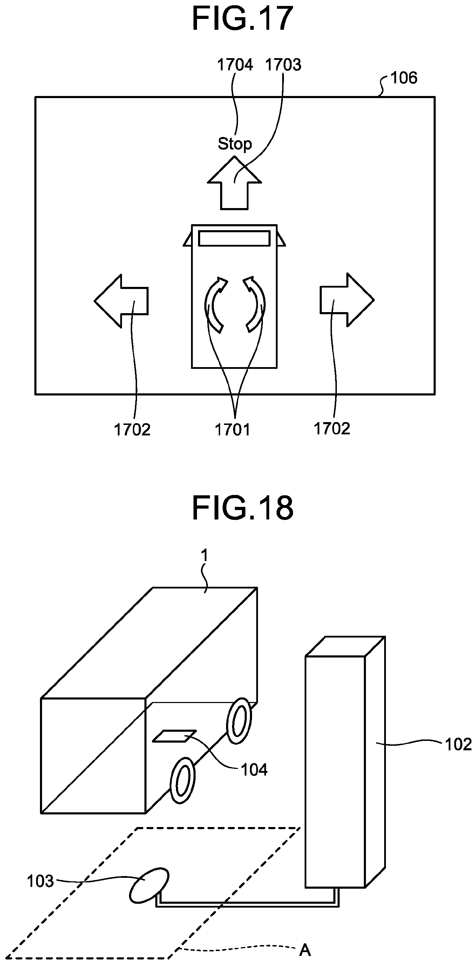

FIG. 17 is a diagram illustrating an example of the positional deviation information displayed on the display unit in the charging systems according to the first to ninth embodiments. If the inclination angle β (rotational deviation) with respect to the longitudinal direction of the charging area A is detected, the positional deviation detecting unit 105 displays rotational deviation information 1701, such as arrows, for making the rotational deviation identifiable, on the display unit 106, as illustrated in FIG. 17. If the positional deviation (right-left deviation) with respect to the lateral direction of the charging area A is detected, the positional deviation detecting unit 105 displays right-left deviation information 1702, such as arrows, for making the right-left deviation identifiable, on the display unit 106, as illustrated in FIG. 17.

If the positional deviation (deviation in the front-rear direction) with respect to the longitudinal direction of the charging area A is detected, the positional deviation detecting unit 105 displays front-rear deviation information 1703, such as an arrow, for making the deviation in the front-rear direction identifiable, on the display unit 106, as illustrated in FIG. 17. If the above-described positional deviation are not detected (in other words, if the EV bus 1 has been precisely docked in the charging area A), the positional deviation detecting unit 105 displays stop instruction information 1704, such as characters, for instructing to stop the EV bus 1, on the display unit 106. In addition, in the above-described embodiments, the positional deviation detecting unit 105 displays the information on at least one of the inclination angle β, the right-left deviation, and the positional deviation of the EV bus 1 with respect to the longitudinal direction of the charging area A, as the positional deviation information on the display unit 106 provided outside the EV bus 1. However, the present invention is not limited to the above-described embodiments. For example, the positional deviation detecting unit 105 may transmit the positional deviation information through wireless communication to, for example, a display unit near a driver's seat of the EV bus 1, and display thereon the positional deviation information.

In the first to ninth embodiments, the charging unit 102 moves the power feeding unit 103 to near the power receiving unit 104 provided on the roof of the EV bus 1 and charges the power storage functional unit of the EV bus 1. However, if the power receiving unit 104 is provided at the bottom of the EV bus 1 as illustrated in FIG. 18, the charging unit 102 may be configured to charge the power storage functional unit of the EV bus 1, for example, through non-contact charging when the EV bus 1 has advanced into the charging area A and the power receiving unit 104 has moved to near the power feeding unit 103 embedded in the charging area A.

In addition, in the first to ninth embodiments, the example has been described in which the positional deviation detecting unit 105 detects the positional deviation of the EV bus 1 with respect to the charging area A. However, the present invention is not limited to this example as long as the positional deviation of the vehicle is detected with respect to the rectangular predefined area. For example, the positional deviation detecting unit 105 can detect the positional deviation of a wheelchair (an example of the vehicle) with respect to a slope (an example of the predefined area) for getting on and off the wheelchair.

As described above, according to the first to ninth embodiments, the driver D of the EV bus 1 can more accurately stop the EV bus 1 with respect to the charging area A.

A program to be executed by each of the charging systems of the first to ninth embodiments is provided by being incorporated in advance, for example, in a read-only memory (ROM). The program to be executed by each of the charging systems of the first to ninth embodiments may be provided by being recorded as a file in an installable or executable format on a computer-readable recording medium, such as a compact disc read-only memory (CD-ROM), a flexible disk (FD), a compact disc-recordable (CD-R), or a digital versatile disc (DVD).

Moreover, the program to be executed by each of the charging systems of the first to ninth embodiments may be stored on a computer connected to a network, such as the Internet, and provided by being downloaded through the network. The program to be executed by each of the charging systems of the first to ninth embodiments may be provided or distributed through a network, such as the Internet.

The program to be executed by each of the charging systems of the first to ninth embodiments has a modular structure including the above-described units (such as the positional deviation detecting unit 105). As actual hardware, a central processing unit (CPU) reads the program from the above-mentioned ROM and executes the program to load the above-described units into a main memory device, and the positional deviation detecting unit 105 is generated in the main memory device.

While the several embodiments of the present invention have been described, these embodiments are provided merely as examples, and are not intended to limit the scope of the invention. These novel embodiments can be carried out in various other forms, and can be variously omitted, replaced, or modified within the scope not departing from the gist of the invention. These embodiments and modifications thereof are included in the scope and the gist of the invention, and are also included in the scope of the invention described in the claims and equivalents thereof.

**Claims**

1.  A charging device comprising:

    a charging unit configured to charge a power storage functional unit provided in a vehicle stopping in a rectangular predefined area;
    a measuring unit capable of measuring a vertical distance to a point in a first plane that is provided in a first position serving as a roof or a bottom of the vehicle, and that has a gradient of a first angle with respect to a horizontal plane toward an orthogonal direction orthogonal to a traveling direction of the vehicle; and
    a detecting unit configured to detect an angle of inclination of the vehicle with respect to a longitudinal direction of the predefined area based on a first difference, a distance, and the first angle, the first distance being a distance between a first vertical distance to a first point in the first plane and a second vertical distance to a second point in the first plane having a position in the traveling direction different from that of the first point, the distance being a distance between the first point and the second point.

2.  The charging device according to claim 1, wherein
    the measuring unit is capable of measuring a vertical distance to a point in a second plane that is provided on a fore side in the traveling direction than the first plane in the first position, and that has no gradient, and
    the detecting unit is configured to detect a positional deviation of the vehicle with respect to a lateral direction of the predefined area based on a second difference, a reference value, and the first angle, the second difference being a difference between a vertical distance to a point in the second plane and a vertical distance to a point in the first plane having the same position in the orthogonal direction as that of the point in the second plane, the reference value being a reference value of the second difference in a case where the vehicle has stopped in the predefined area.

3.  The charging device according to claim 2, wherein
    the measuring unit is capable of measuring vertical distances to points in a third plane and in the first plane, the third plane being provided on an aft side in the traveling direction than the first plane in the first position, and that is parallel to the first plane,
    a third difference of the third plane relative to the first plane in a vertical direction from the first position is larger than an upper limit of the first difference, and
the detecting unit is configured to determine that the positional deviation of the vehicle with respect to the longitudinal direction has been eliminated when the third difference is reached by a difference between the vertical distance to the point in the first plane measured by the measuring unit and a vertical distance measured by the measuring unit after the vertical distance has been measured.

4. The charging device according to claim 3, wherein
the measuring unit comprises a first measuring unit capable of measuring vertical distances to points in the third plane and the first plane and a second measuring unit that is provided closer than the first measuring unit to an entrance side of the predefined area, and that is capable of measuring vertical distances to points in the first plane and the third plane, and
the detecting unit is configured to determine that a position of the vehicle with respect to the longitudinal direction have come close to a position where the charging unit is allowed to perform the charging when the third difference is reached by a difference between a vertical distance to a point in the first plane measured by the second measuring unit and a vertical distance measured by the second measuring unit after the vertical distance has been measured, and is configured to determine that the positional deviation of the vehicle with respect to the longitudinal direction has been eliminated when the third difference is reached by a difference between a vertical distance to a point in the first plane measured by the first measuring unit and a vertical distance measured by the first measuring unit after the vertical distance has been measured.

5. The charging device according to claim 4, wherein
the second measuring unit is capable of measuring a vertical distance to a point in a fourth plane that is provided on an aft side in the traveling direction than the third plane in the first position, and that is parallel to the first plane, the fourth plane differs from the third plane at least in position in the vertical direction from the first position, and
the detecting unit is configured to detect the positional deviation of the vehicle with respect to the longitudinal direction when the detecting unit detects that no positional deviation of the vehicle is present with respect to the longitudinal direction and then the vertical distance measured by the second measuring unit changes before the charging unit charges the power storage functional unit.

6. The charging device according to any one of claims 1 to 5, wherein the detecting unit is configured to detect the positional deviation of the vehicle with respect to the predefined area when the detected inclination of the vehicle exceeds a predetermined angle.

7. The charging device according to claim 5, wherein the detecting unit is configured to transmit information on the angle of inclination of the vehicle with respect to the longitudinal direction of the predefined area, the positional deviation of the vehicle with respect to the lateral direction of the predefined area, and the positional deviation of the vehicle with respect to the longitudinal direction of the predefined area, to a display unit of the vehicle through wireless communication.

8. The charging device according to claim 5, wherein
the first measuring unit and the second measuring unit are provided in the first position in an order of the second plane, the first plane, the third plane, the fourth plane, and a fifth plane from a front side of the vehicle along the traveling direction, and
the fifth plane is provided closer than the fourth plane to an exit side of the predefined area in the longitudinal direction of the predefined area, and has no gradient with respect to the horizontal plane.

9. A charging device comprising:

a charging unit configured to charge a power storage functional unit provided in a vehicle stopping in a rectangular predefined area;
a measuring unit that is provided on a roof of the vehicle, and that is configured to measure a vertical distance to a point in a first plane that is provided above the vehicle stopping in the predefined area, and that has a gradient of a first angle with respect to a horizontal plane toward a lateral direction of the predefined area; and
a detecting unit configured to detect an angle of inclination of the vehicle with respect to a longitudinal direction of the predefined area based on a first difference, a distance, and the first angle, the first difference being a difference between a first vertical distance to a first point in the first plane and a second vertical distance to a second point in the first plane having a position in the longitudinal direction of the predefined area different from that of the first point, the distance being a distance between the first point and the second point.

**10.** A positional deviation detection method comprising:

measuring a vertical distance to a point in a first plane that is provided in a first position serving as a roof or a bottom of a vehicle stopping in a rectangular predefined area and being charged, and that has a gradient of a first angle with respect to a horizontal plane toward an orthogonal direction orthogonal to a traveling direction of the vehicle; and

detecting an angle of inclination of the vehicle with respect to the longitudinal direction based on a first difference, a distance, and the first angle, the first difference being a difference between a first vertical distance to a first point in the first plane and a second vertical distance to a second point in the first plane having a position in the traveling direction different from that of the first point, the distance being a distance between the first point and the second point.

# FIG.1

# FIG.2

# FIG.3A

# FIG.3B

# FIG.3C

# FIG.3D

# FIG.3E

# FIG.4

# FIG.5A

# FIG.5B

# FIG.5C

# FIG.6A

# FIG.6B

# FIG.6C

# FIG.7A

# FIG.7B

# FIG.8

# FIG.9

# FIG.10

# FIG.11

# FIG.12

# FIG.13

# FIG.14

| | | | S1 | S2 | S3 | S4 | S5 | S6 | S7 |
|---|---|---|---|---|---|---|---|---|---|
| OPERATING STATE OF EV BUS | APPROACHING | | ENTERING | CORRECT RIGHT-LEFT DEVIATION | CORRECT RIGHT-LEFT DEVIATION AND ROTATIONAL DEVIATION | APPROACH-ING TO PRECISE DOCKING POSITION | IN PRECISE DOCKING POSITION | OVERRUN-NING PRECISE DOCKING POSITION | OVERRUN-NING PRECISE DOCKING POSITION |
| DETECTION CONTENT OF POSITIONAL DEVIATION | | | REFERENCE DISTANCE | RIGHT-LEFT DEVIATION | RIGHT-LEFT DEVIATION ROTATIONAL DEVIATION | RIGHT-LEFT DEVIATION ROTATIONAL DEVIATION | RIGHT-LEFT DEVIATION ROTATIONAL DEVIATION | RIGHT-LEFT DEVIATION ROTATIONAL DEVIATION | RIGHT-LEFT DEVIATION ROTATIONAL DEVIATION |
| MEASUREMENT POSITION OF FIRST DISTANCE MEASURING INSTRUMENT | GROUND SURFACE | GROUND SURFACE | SECOND REFLECTING PLANE | SECOND REFLECTING PLANE | FIRST REFLECTING PLANE | FIRST REFLECTING PLANE | THIRD REFLECTING PLANE | THIRD REFLECTING PLANE | FOURTH REFLECTING PLANE |
| MEASUREMENT POSITION OF SECOND DISTANCE MEASURING INSTRUMENT | GROUND SURFACE | SECOND REFLECT-ING PLANE | SECOND REFLECTING PLANE | FIRST REFLECTING PLANE | FIRST REFLECTING PLANE | THIRD REFLECTING PLANE | THIRD REFLECTING PLANE | FOURTH REFLECTING PLANE | FOURTH REFLECTING PLANE |

EP 3 412 492 A1

# FIG.15

## FIG.16

| | | | S11 | S12 | S13 | S14 | S15 | S16 | S17 |
|---|---|---|---|---|---|---|---|---|---|
| OPERATING STATE OF EV BUS | APPROACHING | | ENTERING | CORRECT RIGHT-LEFT DEVIATION | CORRECT RIGHT-LEFT DEVIATION AND ROTATIONAL DEVIATION | APPROACH-ING TO PRECISE DOCKING POSITION | IN PRECISE DOCKING POSITION | OVERRUN-NING PRECISE DOCKING POSITION | OVERRUN-NING PRECISE DOCKING POSITION |
| DETECTION CONTENT OF POSITIONAL DEVIATION | | | REFERENCE DISTANCE | RIGHT-LEFT DEVIATION | RIGHT-LEFT DEVIATION ROTATIONAL DEVIATION | RIGHT-LEFT DEVIATION ROTATIONAL DEVIATION | RIGHT-LEFT DEVIATION ROTATIONAL DEVIATION | RIGHT-LEFT DEVIATION ROTATIONAL DEVIATION | RIGHT-LEFT DEVIATION ROTATIONAL DEVIATION |
| MEASUREMENT POSITION OF FIRST DISTANCE MEASURING INSTRUMENT | ∞ | SECOND REFLECT-ING PLANE | SECOND REFLECTING PLANE | FIRST REFLECTING PLANE | FIRST REFLECTING PLANE | THIRD REFLECTING PLANE | THIRD REFLECTING PLANE | FOURTH REFLECTING PLANE | FOURTH REFLECTING PLANE |
| MEASUREMENT POSITION OF SECOND DISTANCE MEASURING INSTRUMENT | ∞ | ∞ | SECOND REFLECTING PLANE | SECOND REFLECTING PLANE | FIRST REFLECTING PLANE | FIRST REFLECTING PLANE | THIRD REFLECTING PLANE | THIRD REFLECTING PLANE | FOURTH REFLECTING PLANE |

EP 3 412 492 A1

# FIG.17

1704  1703

106

Stop

1702          1701          1702

# FIG.18

1

104

102

103

A

## INTERNATIONAL SEARCH REPORT

| | International application No. |
| --- | --- |
| | PCT/JP2016/087830 |

**A. CLASSIFICATION OF SUBJECT MATTER**

*B60L11/18*(2006.01)i, *B60M7/00*(2006.01)i, *H02J7/00*(2006.01)i, *H02J50/90*(2016.01)i

According to International Patent Classification (IPC) or to both national classification and IPC

**B. FIELDS SEARCHED**

Minimum documentation searched (classification system followed by classification symbols)
B60L11/18, B60M7/00, H02J7/00, H02J50/90

Documentation searched other than minimum documentation to the extent that such documents are included in the fields searched
Jitsuyo Shinan Koho          1922-1996    Jitsuyo Shinan Toroku Koho   1996-2017
Kokai Jitsuyo Shinan Koho    1971-2017    Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-236449 A  (Aisin Seiki Co., Ltd.), 21 November 2013 (21.11.2013), paragraphs [0082] to [0084]; fig. 10 (Family: none) | 1-10 |
| A | JP 7-41766 A  (Yugen Kaisha Adabu Techno), 10 February 1995 (10.02.1995), paragraph [0011]; fig. 3 (Family: none) | 1-10 |
| A | JP 5-278503 A  (Hitachi Electronics Engineering Co., Ltd.), 26 October 1993 (26.10.1993), paragraphs [0009] to [0012]; fig. 1 to 3 (Family: none) | 1-10 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 February 2017 (27.02.17) | 07 March 2017 (07.03.17) |

| Name and mailing address of the ISA/ | Authorized officer |
| --- | --- |
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

International application No.

PCT/JP2016/087830

C (Continuation).    DOCUMENTS CONSIDERED TO BE RELEVANT

| Category* | Citation of document, with indication, where appropriate, of the relevant passages | Relevant to claim No. |
|---|---|---|
| A | JP 4-285406 A  (Tadao TOTSUKA),<br>09 October 1992 (09.10.1992),<br>paragraphs [0007] to [0016]; fig. 1 to 3<br>(Family: none) | 1-10 |
| A | JP 2014-79029 A  (Nissan Motor Co., Ltd.),<br>01 May 2014 (01.05.2014),<br>paragraphs [0023] to [0024]; fig. 2<br>(Family: none) | 1-10 |
| A | JP 57-126202 A  (Toshihiro TSUMURA),<br>05 August 1982 (05.08.1982),<br>page 7, upper right column, line 6 to lower<br>right column, line 5; fig. 11A to 11B<br>(Family: none) | 1-10 |
| P,A | US 2016/0280085 A1  (PROTERRA INC.),<br>29 September 2016 (29.09.2016),<br>fig. 1 to 4<br>(Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011016514 A
- JP 2005289580 A